# EUROPÄISCHE PATENTSCHRIFT

(11) **EP 4 313 839 B1**
(45) Veröffentlichungstag und Bekanntmachung des Hinweises auf die Patenterteilung: **21.01.2026**
(21) Anmeldenummer: 22709694.8
(22) Anmeldetag: 01.03.2022
(51) Int. Cl.: B66F 9/075, B64C 39/02, B66F 17/00

(54) **VERFAHREN UND SYSTEM ZUR LASTERKENNUNG BEI EINEM FLURFÖRDERZEUG**
METHOD AND SYSTEM FOR LOAD DETECTION IN AN INDUSTRIAL TRUCK
PROCÉDÉ ET SYSTÈME DE DÉTECTION DE CHARGE DANS UN CHARIOT DE MANUTENTION

(30) Priorität: 31.03.2021 DE 102021108186; 16.04.2021 DE 102021109613
(43) Veröffentlichungstag der Anmeldung: 07.02.2024
(73) Patentinhaber: STILL GmbH, 22113 Hamburg (DE)
(72) Erfinder: IGNATOV, Marina, 24114 Kiel (DE); SMOLORZ, Sebastian, 30175 Hannover (DE); VIERECK, Volker, 23898 Kühsen (DE); ABEL, Bengt, 21335 Lüneburg (DE); SCHÜTHE, Dennis, 21244 Buchholz (DE)
(74) Vertreter: Patentship Patentanwaltgesellschaft
(86) Internationale Anmeldenummer: PCT/EP2022/055076
(87) Internationale Veröffentlichungsnummer: WO 2022/207215

(56) Entgegenhaltungen:
- EP-A1- 3 378 825
- EP-A1- 3 960 692
- WO-A1-2020/215772
- DE-A1- 102020 123 381

## Beschreibung

Die Erfindung betrifft ein Verfahren zur Lasterkennung bei einem Flurförderzeug, wobei die Last mittels mindestens eines optischen Sensors erfasst und durch Auswertung der Sensordaten des Sensors mittels künstlicher Intelligenz in mindestens einer Datenverarbeitungseinheit erkannt wird, sowie ein System zur Durchführung des Verfahrens.

Flurförderzeuge werden zum Transport und/oder zur Handhabung von Lasten eingesetzt. Ein Beispiel hierfür ist die so genannte Kommissionierung. Unter Kommissionierung versteht man alle Methoden zur Zusammenstellung von bestimmten Lastobjekten, insbesondere von Stückgütern, z.B. Packstücken, in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden die Stückgüter manuell von einer Kommissionierperson oder von autonom betriebenen Transportfahrzeugen von einer Quellposition, insbesondere einem Quell-Ladungsträger, z.B. einer Quellpalette, aufgenommen und auf einem auf dem Fahrzeug transportierten Ziel-Ladungsträger, z.B. einer Zielpalette, abgesetzt. Insbesondere werden hierzu mobile Kommissionierroboter verwendet, die die Stückgüter selbstständig mittels Roboterarmen aufnehmen können. Diese mobilen Kommissionierroboter erhalten die Auftragsdaten wie Auftragsnummer, Koordinaten des Lagerortes, Stückzahl und Gewicht der Stückgüter automatisch von einem Zentralrechner. Sie können z.B. bestimmte Regalfächer in Regallagern gezielt anfahren und das gewünschte Lastobjekt mithilfe einer Handhabungseinrichtung, insbesondere eines ein Aufnahmewerkzeug aufweisenden Greifsystems, aus dem Regalfach entnehmen. Das Aufnahmewerkzeug kann als Greifer, beispielsweise als Adhäsionsgreifer oder Vakuumgreifer, ausgebildet sein.

Die zur Kommissionierung eingesetzten Fahrzeuge sind meist selbst fahrfähig oder werden von einem autonomen Fahrzeug (englisch: automated guided vehicle, kurz: AGV) verfahren und weisen meist einen Hubmast oder eine andere Hubeinrichtung zur vertikalen Positionierung des Greifers im Regal und auf dem Zielgebinde auf.

In der Regel sind die zu transportierenden Lasten nicht standardisiert. Deswegen unterscheiden sich die Lasten meist in folgenden Faktoren:
Gewicht, Gewichtsverteilung, Höhe, Breite, Tiefe, Anzahl der Einzellastobjekte, dreidimensionale Verteilung auf der Ladefläche des Flurförderzeugs, Schwerpunkt der Last in der Applikationsachse (vertikale Z-Achse), horizontaler Lastschwerpunktabstand der Last, etc..

Dabei sind die genannten Faktoren dynamischer Natur. Insbesondere beim Kommissionieren ändern sich die Faktoren einer Last ständig. Dadurch entstehen Probleme bei der Lastaufnahme durch autonome Flurförderzeuge, weil die oben genannten Faktoren entscheidend sind, ob überhaupt eine Last von einem AGV aufgenommen werden darf. Dabei spielt insbesondere ein möglicher Lastüberhang, bei dem die Last über die Ladungsträgerkontur hinausragt, eine entscheidende Rolle, da Ladungsträger mit unbekannt überhängender Last nicht ohne weiteres gehandhabt werden können. So kann beispielsweise weder ein geeignet großer Regalplatz in einem Regal ermittelt werden, noch ist sichergestellt, dass ein sicherer Transport gewährleistet ist, da die überhängende Last zu einer indirekten Verbreiterung des AGVs führen könnte, was einen Personenschutz entsprechend geltender Normen unmöglich macht.

Des Weiteren spielen diese Faktoren der transportieren Last eine Rolle bei der Performance von AGVs. Sowohl die Geschwindigkeit, der Winkel einer Kurvenfahrt, als auch der Sicherheitsaspekt werden anhand der Faktoren einer Last ausgelegt. Sind diese nicht bekannt, muss man vom Worst Case ausgehen.

Es ist derzeit noch keine Lösung zur Ermittlung aller Faktoren einer zu transportierenden Last bekannt.

Zur Sicherstellung einer nicht über den Ladungsträger hinausragenden Last werden oftmals separate stationäre Konturprüfungsplätze eingesetzt. Diese werden nach erfolgtem Wareneingang als erstes von dem die Last transportierenden Flurförderzeug direkt angefahren, um einen weiteren sicheren Transport der Last mit dem Flurförderzeug gewährleisten zu können. Dies bedeutet jedoch einen aufwändigen zusätzlichen Transportvorgang für jeden einzelnen Ladungsträger.

Insgesamt ist festzustellen, dass eine überhängende Last ein aufwendiges Problem in jedem automatischen Lager darstellt. Es müssen extra teure Konturprüfungsplätze, sogenannte Load-Contour-Check-Plätze, aufgebaut und mit jeder neu eintreffenden Ladung angefahren werden, bevor automatisches Handling der Last mit dem Flurförderzeug sicher gewährleistet werden kann. Gibt es solche Konturprüfungsplätze nicht, muss eine entsprechende Prüfung manuell erfolgen.

Das Gewicht und die Gewichtsverteilung einer Last können durch zusätzliche Sensorik, insbesondere durch Gewichtssensoren, ermittelt werden.

Die anderen Faktoren der Last sind teilweise nicht mit einfacher Sensorik ermittelbar.

Aus Sicherheitsgründen geht man deswegen oft von einer binären Last aus. Dies bedeutet, dass sich entweder eine Last auf dem Flurförderzeug befindet oder nicht. Dies schränkt jedoch die Sicherheit und Performance des Flurförderzeugs extrem ein.

Aber selbst diese eingeschränkte Performance der binären Lasterkennung kann nur mit Verkabelungsaufwand direkt an der Ladefläche des Flurförderzeugs realisiert werden. Kabel stellen jedoch immer ein Problem bei Flurförderzeugen mit beweglichen Plattformen dar, insbesondere bei autonomen mobilen Plattformfahrzeugen mit anhebbarer und absenkbarer Hubplattform zum Lasttransport. Einerseits kann die Kabellänge aufgrund der Datenübertragung problematisch sein. Andererseits stellen Kabel an beweglichen Teilen, z.B. an einer Hubplattform, immer eine Brandgefahr dar, die durch Quetschen der Kabel verursacht werden kann.

Häufig organisieren autonom fahrende Flurförderzeuge den Wareneingang über die Aufnahme von Paletten. Dies ist jedoch nur möglich, wenn alle drei Dimensionen der Last bekannt sind, also die Breite, die Höhe und die Tiefe. Ansonsten wird die Palette nicht aufgenommen.

Ein großes Problem beim Kommissionieren ist das manuelle oder automatisierte Aufnehmen von falschen Lasten. Die Folgekosten hierfür sind enorm.

Aus der WO 2020/215772 A1 ist ein gattungsgemäßes Verfahren zur Lasterkennung bei einem Flurförderzeug bekannt.

Die DE 10 2020 123 381 A1 offenbart ein Positions- und Lageabschätzsystem, das eine Position und eine Lage einer Palette, die ein Frachtumschlagziel ist, hinsichtlich eines Gabelstaplers mit einem Paar von Gabeln abschätzt.

Aus der EP 3 378 825 A1 ist ein Flurförderzeug mit einem flugfähigen Objekt bekannt.

Der vorliegenden Erfindung liegt die Aufgabe zugrunde, ein Verfahren zur Lasterkennung bei einem Flurförderzeug sowie ein System zur Durchführung des Verfahrens so auszugestalten, dass auch bei komplex strukturierten Lasten, die von einem Flurförderzeug transportiert werden, eine zuverlässige Lasterkennung sichergestellt ist.

Diese Aufgabe wird verfahrensseitig erfindungsgemäß dadurch gelöst, dass ein Lastschwerpunkt der Last durch Auswertung der Sensordaten des Sensors in der Datenverarbeitungseinheit ermittelt wird.

Als optischer Sensor wird zweckmäßigerweise eine Kamera verwendet. Die Kamera kann insbesondere als kompaktes Kameramodul ausgebildet sein, das flexibel einsetzbar ist. Hierbei stellen beispielsweise Handykameras bereits eine ausreichende Qualität dar.

Die Kamera stellt die notwendigen Sensordaten für die Auswertung in der Datenverarbeitungseinheit bereit. Die Auswertung der Sensordaten in der Datenverarbeitungseinheit wird vorteilhafterweise mittels eines bildgebenden Verfahrens durchgeführt. Dabei werden Methoden der künstlichen Intelligenz angewendet.

Künstliche Intelligenz (KI) ermöglicht die Identifikation, Auswertung und Klassifizierung von Objekten, beispielsweise Lastobjekten. Kleine, leistungsstarke Computer können heute aus einer Hardware-Umgebung, die auf KI-Anwendungen spezialisiert ist, aufgebaut sein.

Der optische Sensor kann von dem Flurförderzeug selbst mitgeführt werden. Dabei wird als Sensor vorzugsweise ein an einer Hubeinrichtung des Flurförderzeugs, beispielsweise dem oberen Ende eines Hubmastes, angeordneter Sensor verwendet. Durch Anordnung des optischen Sensors an der Hubeinrichtung wird erreicht, dass der Sensor aus einer höheren Position das Flurförderzeug und die beispielsweise auf einer Ladefläche des Flurförderzeugs befindliche Last erfassen kann.

Zusätzlich oder alternativ kann als optischer Sensor auch ein außerhalb des Flurförderzeugs angeordneter Sensor verwendet werden.

Dabei kann der optische Sensor an einem Infrastrukturelement in einer Betriebsumgebung des Flurförderzeugs angebracht sein. Beispielsweise kann der Sensor an einem Mast in größerer Höhe angeordnet sein, um das Flurförderzeug und die dazugehörige Last gut erfassen zu können.

Bevorzugt wird als optischer Sensor ein beweglicher Sensor verwendet, der um das Flurförderzeug und die Last herum bewegt werden kann und so das Flurförderzeug und die Last aus verschiedenen Richtungen erfassen kann. Dadurch wird die Auswertung der Sensordaten und Erkennung der Last in der Datenverarbeitungseinheit erleichtert. Hierzu kann beispielsweise ein Sensor verwendet werden, der von einer Betriebsperson mitgeführt wird. Dabei kann es sich insbesondere um eine BodyCam oder eine HeadCam, um Smartglases oder Virtual-Reality-Brillen handeln.

Gemäß einer besonders bevorzugten Ausgestaltung der Erfindung ist vorgesehen, dass der Sensor von einer Flugdrohne mitgeführt wird. Flugdrohnen sind an sich für andere Einsatzwecke bereits bekannt. Seit einigen Jahren finden in verschiedenen Bereichen Drohnen zunehmend Anwendung. Sie sind sowohl bei Privatleuten als Hobby beliebt als auch im professionellen Bereich. Dabei kommen ihnen ihre Flugfähigkeit, ihre leistungsfähigen Kameras sowie ihre Konnektivität mit anderen Computern und Smartphones zugute. Auch im logistischen Umfeld wird damit begonnen, Drohnen einzusetzen, z.B. zur Lagerinventur, oder deren zukünftiger Einsatz in Aussicht gestellt, beispielsweise zur Paketauslieferung. Auch Industriedrohnen mit sehr fortschrittlicher Technik werden bereits angeboten, die künstliche Intelligenz einsetzen und unter anderem eine Sensorfusion, beispielsweise Lidar, Kamera und Radar, eine Kartierung der Umgebung und eine Selbstlokalisation ermöglichen.

Die Stabilisierung des Schwebeflugs einer Flugdrohne ist bereits so fortgeschritten, dass eine Lastobjekterkennung durch eine an der Flugdrohne angeordnete Kamera problemlos möglich ist. Es können auch in den Flugdrohnen integrierte Kameras genutzt werden. Die Nutzlast bei einer Flugdrohne kann derzeit bis zu 15 kg betragen, wodurch ein KI-fähiger Computer und noch eine zusätzliche Sende- und Empfangseinheit unkompliziert durch die Flugdrohne mitgetragen werden können.

Durch die Verwendung einer Flugdrohne wird die Möglichkeit geschaffen, dass der von der Flugdrohne mitgeführte optische Sensor flexibel und schnell 360⁰ einer Last erfassen kann. Ein weiterer Vorteil einer Flugdrohne ist, dass dadurch ohne zusätzlichen Aufwand auch Lasten von mehreren Flurförderzeugen erfasst werden können.

Vorzugsweise wird auch die Datenverarbeitungseinheit von der Flugdrohne mitgeführt. Flugdrohnen sind ohne weiteres in der Lage, auch kompakte KI-Module zur Auswertung der Sensordaten mittels künstlicher Intelligenz zu tragen. Somit können sowohl die optische Erfassung der Last und des Flurförderzeugs mittels des optischen Sensors als auch die Auswertung der Sensordaten mittels künstlicher Intelligenz an Bord der Flugdrohne durchgeführt werden. Auf eine Übertragung von Sensordaten an eine externe Datenverarbeitungseinheit kann in diesem Fall verzichtet werden.

Die Datenverarbeitungseinrichtung kann aber auch von dem Flurförderzeug selbst mitgeführt werden. Dies ist insbesondere dann von Vorteil, wenn der optische Sensor an dem Flurförderzeug angebracht ist.

Eine weitere Möglichkeit besteht darin, dass die Datenverarbeitungseinheit stationär betrieben wird. In diesem Fall werden zweckmäßigerweise die Sensordaten des von der Flugdrohne und/oder von dem Flurförderzeug mitgeführten Sensors über eine drahtlose Datenverbindung an die stationäre Datenverarbeitungseinheit übermittelt.

Es kann auch vorteilhaft sein, Sensordaten des von der Flugdrohne mitgeführten Sensors über eine drahtlose Datenverbindung an die von dem Flurförderzeug mitgeführte Datenverarbeitungseinheit zu übermitteln. Umgekehrt kann es von Vorteil sein, Sensordaten des von dem Flurförderzeug mitgeführten Sensors über eine drahtlose Datenverbindung an die von der Flugdrohne mitgeführte Datenverarbeitungseinheit zu übermitteln.

Eine Weiterbildung des Erfindungsgedankens sieht vor, dass mindestens zwei Datenverarbeitungseinheiten verwendet werden, die über eine drahtlose Datenverbindung Informationen austauschen. Auf diese Weise können mehrere Datenverarbeitungseinheiten miteinander vernetzt werden.

In einem fortgeschrittenen Ausbaustadium ist es beispielsweise denkbar, dass sowohl mehrere stationäre Datenverarbeitungseinheiten als auch mehrere von Flugdrohnen mitgeführte Datenverarbeitungseinheiten und mehrere von Flurförderzeugen mitgeführte Datenverarbeitungseinheiten vorgesehen sind, die alle über drahtlose Datenverbindungen Informationen untereinander austauschen. In Kombination mit mehreren optischen Sensoren, von denen ein Teil stationär angeordnet sein kann und ein Teil von den Flugdrohnen und den Flurförderzeugen mitgeführt wird, und die ihre Sensordaten an jeweils zugeordnete Datenverarbeitungseinheiten übermitteln, kann eine maximal denkbare Vernetzung erreicht werden.

Dabei kann eine Flugdrohne die Lasten mehrerer Flurförderzeuge detektieren. Hierzu werden vorzugsweise die Lasten mindestens zweier Flurförderzeuge von dem von der Flugdrohne mitgeführten Sensor erfasst.

Es kann auch die Last von einem Flurförderzeug von mehreren Flugdrohnen detektiert werden. Hierzu werden vorteilhafterweise die Last des Flurförderzeugs oder die Lasten mindestens zweier Flurförderzeuge von den von mindestens zwei Flugdrohnen mitgeführten Sensoren erfasst.

Gemäß einer bevorzugten Ausgestaltung der Erfindung ist vorgesehen, dass das Flurförderzeug und die dazugehörige Last mittels des Sensors erfasst werden und durch Auswertung der Sensordaten des Sensors in der Datenverarbeitungseinheit ein Abgleich von Lastdaten der erkannten Last mit, in der Datenverarbeitungseinheit für das Flurförderzeug vorher gespeicherten, Lastdaten durchgeführt wird, wobei bei einer Abweichung der Lastdaten die Lastdaten für das Flurförderzeug aktualisiert werden.

Beispielsweise erfasst also die Kamera der Flugdrohne oder eine andere, nicht an dem Flurförderzeug angebrachte Kamera oder eine direkt am Flurförderzeug angebrachte Kamera das Flurförderzeug und die dazugehörige Last. Die der Kamera zugeordnete Datenverarbeitungseinheit gleicht die Lastdaten des bestimmten Flurförderzeugs mit den vorher in der Datenverarbeitungseinheit gespeicherten Lastdaten für das Flurförderzeug ab. Wenn sich diese unterscheiden, aktualisiert die Datenverarbeitungseinheit die Lastdaten für das Flurförderzeug.

Eine andere Möglichkeit besteht darin, dass die Flugdrohne zuvor den Auftrag von dem Flurförderzeug bekommt, die Last vom Flurförderzeug zu überprüfen und zu aktualisieren.

Insbesondere können folgende Kriterien der Lasterkennung erfindungsgemäß erfüllt werden:
1. Abmaße der Last (Höhe, Breite, Tiefe):
   Einzelne Lastobjekte der Last können durch Auswertung der Sensordaten des Sensors in der Datenverarbeitungseinheit, beispielsweise mittels bildgebender Verfahren und künstlicher Intelligenz, erkannt und deren Maße (Höhe, Breite, Tiefe) ermittelt werden. Daraus kann dann eine Gesamtgröße (Höhe, Breite, Tiefe) der auf dem Flurförderzeug befindlichen Last kalkuliert werden. Hier bietet die Anwendung einer Flugdrohne den Vorteil, dass die Flugdrohne 360⁰ um die Last herumfliegen kann, so dass der optische Sensor die Last von allen Seiten erfassen kann.
2. Anzahl der Einzellastobiekte:
   Einzelne Lastobjekte der auf dem Flurförderzeug befindlichen Last können durch Auswertung der Sensordaten des Sensors in der Datenverarbeitungseinheit erkannt werden und deren Anzahl ermittelt wird.
3. Gewicht und Gewichtsverteilung der Last:
   Marker, beispielsweise QR-Code, Barcode, Aruco-Marker, von einzelnen Lastobjekten der Last können durch Auswertung der Sensordaten des Sensors in der Datenverarbeitungseinheit ausgelesen werden und ausgelesene Informationen, insbesondere Gewichtsinformationen, dem jeweiligen Lastobjekt zugeordnet werden. Das Gewicht einzelner Lastobjekte kann hierbei durch entsprechende Marker an den Lastobjekten, die von dem Sensor ausgelesen werden, erfasst und dem entsprechenden Lastobjekt zugeordnet werden.
   Des Weiteren kann ein Lastobjekt auf Grund einer Umverpackung an sich erkannt und klassifiziert werden und darüber das Gewicht aus einer Datenbank ermittelt werden.
   Eine weitere Möglichkeit besteht darin, über Gewichtssensoren das Gewicht dem Lastobjekt beim Beladen zuzuordnen. Dadurch bekommt man auch eindeutige Informationen über die Gewichtsverteilung der Last.
4. Dreidimensionale Verteilung der Last auf dem Flurförderzeug:
   Eine dreidimensionale Verteilung der Last auf einer Ladefläche des Flurförderzeugs kann durch Auswertung der Sensordaten des Sensors in der Datenverarbeitungseinheit ermittelt werden.
   Dabei wird anhand der Abmaße der einzelnen Lastobjekte und der bekannten Maße der Ladefläche des Flurförderzeugs eine konkrete Verteilung der Last auf der Ladefläche des Flurförderzeugs bestimmt.
5. Lastschwerpunkt:
   Ein Schwerpunkt der Last auf einer Ladefläche des Flurförderzeugs wird durch Auswertung der Sensordaten des Sensors in der Datenverarbeitungseinheit ermittelt.
   Hierzu kann beispielsweise der Sensor der Flugdrohne das Flurförderzeug und die dazugehörige Last erfassen. Dabei gibt es zwei Möglichkeiten, den Lastschwerpunkt zu detektieren. Einmal kann man die Form der gesamten Last nehmen und dadurch den Höhenschwerpunkt der Last ermitteln oder man kann erst die Geometrie und den Lageort jedes einzelnen Lastobjekts durch die Auswertung der Sensordaten mittels künstlicher Intelligenz detektieren. Zusätzlich kann durch einen Marker, zum Beispiel einem QR-Code, Aruco Marker, Barcode etc., das Gewicht der einzelnen Lastobjekte übermittelt werden. Durch die Gesamtheit der Informationen kann ein präziserer Schwerpunkt der gesamten Last ermittelt werden.
   Insbesondere für autonome Plattformwagen ist der Lastschwerpunkt von Bedeutung, weil dadurch die Geschwindigkeit und die Performance kontinuierlich angepasst werden. Ansonsten muss vom Worst Case ausgegangen werden.
6. Lastschwerpunktabstand:
   Insbesondere bei einer Lastaufnahme ist der Lastschwerpunktabstand, also zum Beispiel der Abstand des Lastschwerpunkts von einem Gabelrücken bei einer Lastgabel, entscheidend für die Erlaubnis einer Lastaufnahme. Ohne diese Information ist eine Lastaufnahme durch ein autonomes Fahrzeug nicht möglich. Durch Auswertung der Sensordaten des Sensors in der Datenverarbeitungseinheit kann weiterhin der Lastschwerpunktabstand der Last ermittelt werden.
7. Qualitätskontrolle und Pickbestätigung beim Kommissionieren:
   In der Datenverarbeitungseinheit kann ein Abgleich von Lastdaten der erkannten Last mit Lastdaten der auftragsgemäß für das Flurförderzeug vorgesehenen Last durchgeführt werden. Bei einer Übereinstimmung der Lastdaten wird eine Freigabe für das Flurförderzeug erteilt. Bei einer Abweichung wird eine Fehlermeldung und/oder ein Rückgabeauftrag für das Flurförderzeug erteilt.
   Auf diese Weise kann das Problem des falschen Pickens von Lasten gelöst werden.
   Das Gewicht und die einzelnen Abmaße von jeder Last und gegebenenfalls vom Fahrzeug sind üblicherweise in einer Cloud, in einem Warenmanagementsystem oder in ähnlichen Datenbanken gespeichert. Diese Informationen kann die Datenverarbeitungseinheit jederzeit bei Bedarf abrufen. Die Datenbankinformationen über die Last könnten auch beim Start des Auftrags an die Datenverarbeitungseinheit übertragen werden, um auf eine Kommunikation während der Beauftragung zu verzichten.
   Direkt beim Kommissionieren findet eine Qualitätskontrolle statt. Dafür werden für das aktuell gepickte Lastobjekt das Gewicht, die Abmaße, der gegebenenfalls vorhandene Marker an dem Lastobjekt, die Lage, etc. durch Auswertung der Sensordaten des Sensors mittels künstlicher Intelligenz ermittelt. Das erkannte Lastobjekt wird mit den Informationen des Flurförderzeugs, beispielsweise den Lastdaten der zu kommissionierenden Lastobjekte, abgeglichen.
   Wenn das Lastobjekt richtig gepickt wurde, bekommt das Flurförderzeug eine Pickbestätigung. Bei manuell geführten Fahrzeugen kann z.B. eine grüne Anzeige oder eine Freigabe zum Weiterfahren erfolgen. Bei autonomen Fahrzeugen wird z.B. die Freigabe zum Fahren erteilt.
   Wird das gepickte Lastobjekt als falsch für das Flurförderzeug erkannt, gibt es eine Fehlermeldung. Bei manuell geführten Fahrzeugen kann dieser Fehler mittels Anzeige oder Signal der Kommissionierperson signalisiert werden. Bei autonomen Fahrzeugen kann das Fahrzeug aufgefordert werden, das letzte Lastobjekt wieder zurückzulegen. Dies ist möglich, da sowohl die Position des Lastobjekts als auch die Position, woher das Lastobjekt gepickt wurde, bekannt sind. Somit kann während des Auftrags direkt verglichen werden, ob der Auftrag richtig erledigt wird.
   Am Ende können die erkannten und abgeglichenen Lastobjekte insgesamt nochmals mit der Auftragsliste abgeglichen werden und dem Warenmanagement als Quittierung bestätigt werden.
   Der Abgleich mit dem Warenmanagement kann auch dazu genutzt werden, automatisch eine Inventur durchzuführen. Gepickte Lastobjekte werden dabei gezielt aus der Gesamtinventarliste herausgenommen. So ist immer der aktuelle Bestand des Lagers zu erkennen.
   Um den Lagerbestand zu erfassen, muss natürlich auch der Wareneingang überprüft werden. Auch hier kann die Erfindung genutzt werden, um die Waren und Lastobjekte zu erfassen und so dem Warenmanagement hinzuzufügen.

Die Erfindung betrifft ferner ein System zur Durchführung des Verfahrens mit mindestens einem Flurförderzeug und einer Last für das Flurförderzeug.

Beim System wird die gestellte Aufgabe erfindungsgemäß dadurch gelöst, dass mindestens eine mit künstlicher Intelligenz arbeitende, mit mindestens einem optischen Sensor, insbesondere einer Kamera, in Wirkverbindung stehende, Datenverarbeitungseinheit vorgesehen ist, die dazu eingerichtet ist, die Last durch Auswertung der Sensordaten des Sensors zu erkennen.

In einer vorteilhaften Ausgestaltung der Erfindung ist der Sensor an dem Flurförderzeug, insbesondere an einer Hubeinrichtung des Flurförderzeugs, angebracht.

Gemäß einer weiteren, besonders bevorzugten, Ausführungsform der Erfindung ist der Sensor an einer Flugdrohne angebracht.

Es können auch sowohl am Flurförderzeug als auch an der Flugdrohne Sensoren angebracht sein.

Zusätzlich oder alternativ kann auch mindestens ein Sensor an einem Infrastrukturelement stationär angebracht sein.

Zur Auswertung der Sensordaten steht der jeweilige Sensor mit einer Datenverarbeitungseinheit in Wirkverbindung, welche vorzugsweise ebenfalls in der Flugdrohne untergebracht ist.

Alternativ kann die Datenverarbeitungseinheit auch im Flurförderzeug untergebracht sein.

Es können auch sowohl im Flurförderzeug als auch in der Flugdrohne Datenverarbeitungseinheiten untergebracht sein.

Zusätzlich oder alternativ kann auch eine Datenverarbeitungseinheit in einer Infrastruktureinrichtung stationär untergebracht sein.

Falls mehrere Datenverarbeitungseinrichtungen vorgesehen sind, so stehen diese jeweils mit einer Datensende- und Datenempfangseinrichtung in Wirkverbindung, die dazu ausgebildet ist, Informationen mit mindestens einer weiteren Datenverarbeitungseinrichtung auszutauschen.

Besonders bevorzugt steht die Datenverarbeitungseinheit der Flugdrohne mit einer Datensende- und Datenempfangseinrichtung in Wirkverbindung, die dazu ausgebildet ist, Informationen mit mindestens einer weiteren Flugdrohne und/oder dem Flurförderzeug auszutauschen.

Die Erfindung bietet eine ganze Reihe von Vorteilen:
Durch die Qualitätskontrolle und die Pickbestätigung können Betriebskosten beim Kommissioniervorgang reduziert werden. Außerdem wird eine vollautomatisierte Lastaufnahme ermöglicht. Kosten für stationäre Konturprüfungsplätze (Load Contour Check -Plätze), die mit jeder neu eintreffenden Ladung angefahren werden müssen, entfallen. Es ist kein manuelles Eingreifen durch Mitarbeiter mehr nötig. Die Lastaufnahme durch autonome Fahrzeuge ist problemlos möglich. Die Funktionalität des autonomen Betriebs des Flurförderzeugs ist nicht eingeschränkt. Die Sensordaten können direkt in der Flugdrohne verarbeitet werden. Somit kann auf eine Verkabelung verzichtet werden, so dass Brandgefahren durch bewegliche Teile verhindert werden. Außerdem ergeben sich durch graduelle Geschwindigkeitsanpassungen des Flurförderzeugs, insbesondere eines autonomen Flurförderzeugs, Effizienzsteigerungen. Die Fehlerquote durch falsch gepickte Lastobjekte kann erheblich reduziert werden.

Weitere Vorteile und Einzelheiten der Erfindung werden anhand der in den schematischen Figuren dargestellten Ausführungsbeispiele näher erläutert. Hierbei zeigen
- Figur 1: ein System mit mehreren Flurförderzeugen und einer Flugdrohne,
- Figur 2: ein Prinzipbild zur Erkennung der Anzahl und der Abmaße von Lastobjekten,
- Figur 3: ein Prinzipbild zur Erkennung der dreidimensionalen Verteilung von Lastobjekten,
- Figur 4: ein Prinzipbild zur Gewichts-Erkennung,
- Figur 5: ein Prinzipbild zur Erkennung des Lastschwerpunkts und
- Figur 6: eine Darstellung des Lastschwerpunktabstands.

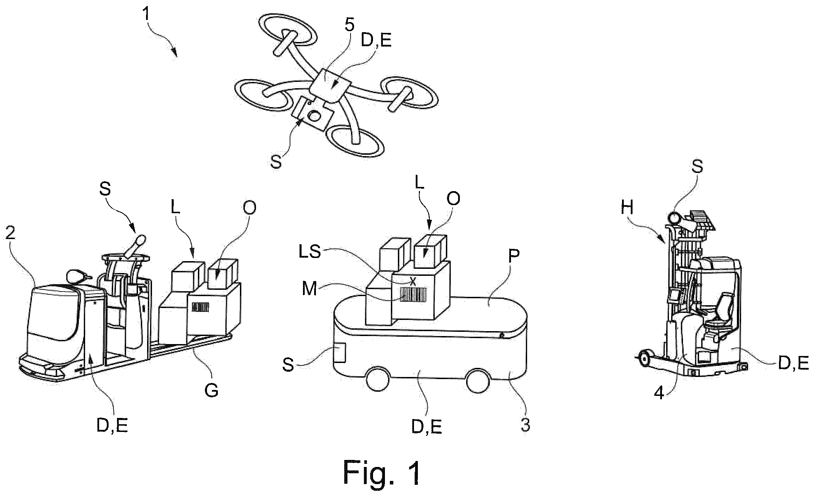

In der Figur 1 ist ein System 1 mit mehreren Flurförderzeugen 2, 3, 4 und einer Flugdrohne 5 dargestellt. Die Flugdrohne 5 verfügt über einen, als Kamera ausgebildeten, optischen Sensor S und eine Datenverarbeitungseinheit D, die mit künstlicher Intelligenz die Sensordaten des Sensors S auswertet. Die Datenverarbeitungseinheit D steht mit einer Datensende- und Datenempfangseinrichtung E in Verbindung. Die Kamera ist bevorzugt beweglich an der Flugdrohne 5 angeordnet.

Das Flurförderzeug 2 ist als Niederhubkommissionierer mit einer Lastgabel G ausgebildet, auf der Lastobjekte O einer Last L abgelegt sind. Das Flurförderzeug 2 kann ebenfalls über einen, als Kamera ausgebildeten, optischen Sensor S und eine Datenverarbeitungseinheit D, die mit künstlicher Intelligenz die Sensordaten des Sensors S auswertet, verfügen. Die Datenverarbeitungseinheit D kann mit einer Datensende- und Datenempfangseinrichtung E in Verbindung stehen.

Das Flurförderzeug 4 weist eine Hubeinrichtung H, beispielsweise einen Hubmast, zur Lasthandhabung auf. In diesem Fall ist der, als Kamera ausgebildete, optische Sensor S am oberen Ende der Hubeinrichtung H angebaut. Dadurch wird ein besserer Überblick des optischen Sensors S gewährleistet. Außerdem ist eine Datenverarbeitungseinheit D vorgesehen, die mit künstlicher Intelligenz die Sensordaten des Sensors S auswertet. Die Datenverarbeitungseinheit D kann mit einer Datensende- und Datenempfangseinrichtung E in Verbindung stehen.

Das Flurförderzeug 3 ist als autonomes Fahrzeug (AGV) mit einer Hubplattform P ausgebildet, auf der Lastobjekte O einer Last L abgelegt sind. Das Flurförderzeug 3 kann über einen, als Kamera ausgebildeten, optischen Sensor S und eine Datenverarbeitungseinheit D, die mit künstlicher Intelligenz die Sensordaten des Sensors S auswertet, verfügen. Die Datenverarbeitungseinheit D kann mit einer Datensende- und Datenempfangseinrichtung E in Verbindung stehen.

Die Lasterkennung der auf den Flurförderzeugen 2, 3, 4 befindlichen Last L wird durch bildgebende Verfahren realisiert. Dafür sind die optischen Sensoren S und die Datenverarbeitungseinheiten D vorgesehen. Dabei hat die Flugdrohne 5 den Vorteil, dass sie die Last L umfliegen kann und so schnell 360⁰ der Last L erkennen kann. Ein weiterer Vorteil der Flugdrohne 5 besteht darin, dass sie die Lasten L von mehreren Flurförderzeugen 2, 3, 4 detektieren kann.

Der optische Sensor S der Flugdrohne 5 stellt die notwendigen Sensordaten für die Auswertung in der Datenverarbeitungseinheit D bereit. Die Auswertung der Sensordaten des Sensors S in der Datenverarbeitungseinheit D wird mittels eines bildgebenden Verfahrens durchgeführt. Dabei werden Methoden der künstlichen Intelligenz angewendet. Durch die Auswertung der Sensordaten des Sensors S können die Abmessungen der Lastobjekte O und deren Anordnung sowie die Anzahl der Einzellastobjekte erkannt werden. Auch die Gewichte und die Gewichtsverteilung der Lastobjekte O kann durch Auslesung von Markem M, die auf den Lastobjekten O aufgebracht sind, erkannt werden. Daraus kann auch der Lastschwerpunkt LS der Last L bestimmt werden.

Die fahrzeugeigenen Sensoren S der Flurförderzeuge 2, 3, 4 können ebenfalls die aufgenommenen Lasten L und die Umgebungen der Flurförderzeuge 2, 3, 4 erfassen. Diese Sensordaten werden in den fahrzeugeigenen Datenverarbeitungseinheiten D ausgewertet.

Um die in der drohneneigenen Datenverarbeitungseinheit D der Flugdrohne 5 vorhandenen und durch Auswertung der Sensordaten des drohneneigenen Sensors S gewonnenen Informationen mit den Flurfördereugen 2, 3, 4 auszutauschen und gegebenfalls mit den in den fahrzeugeigenen Datenverarbeitungseinheiten D vorhandenen und durch Auswertung der Sensordaten der fahrzeugeigenen Sensoren S gewonnenen Informationen abzugleichen, verfügen sowohl die Flugdrohne 5 als auch die Flurförderzeuge 2, 3, 4 über Datensende- und Datenempfangseinrichtungen E.

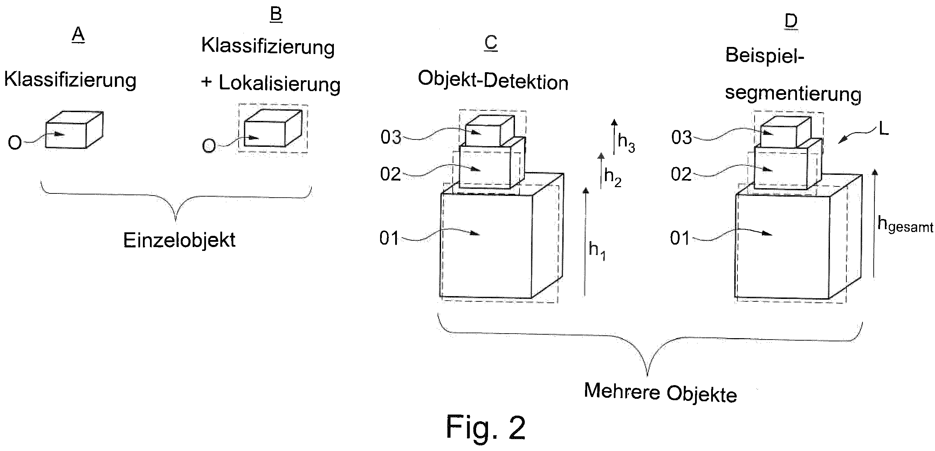

In der Figur 1 erfolgt bevorzugt mit der Flugdrohne 5 und deren Kamera eine Lasterkennung der Last L auf einem der Flurförderzeuge 2, 3, 4 oder mehreren Flurförderzeugen 2, 3, 4. Hierbei können - wie im Folgenden anhand der Figuren 2 bis 6 beschrieben wird - als Faktoren der Last L die Abmessungen der Last L, die Anzahl der Einzellastobjekte O1, O2, O3, das Gewicht und die Gewichtsverteilung der Last L, die dreidimensionale Verteilung der Last L auf dem Flurförderzeug 2, 3, 4 und der Lastschwerpunkt sowie der Lastschwerpunktabstand der Last L ermittelt werden. Diese Faktoren der Last L können über die Datensende- und Datenempfangseinrichtungen E von der Flugdrohne 5 an das entsprechende Flurförderzeug 2, 3, 4 gesendet werden.

Wie in der Figur 2 dargestellt, können mithilfe von bildgebenden Verfahren und künstlicher Intelligenz die einzelnen Lastobjekte O, O1, O2, O3 einer Last L erkannt und deren Maße, beispielsweise die Höhe, die Breite und die Tiefe, sowie die Anzahl der Lastobjekte O1, O2, O3 ermittelt werden. Ein einzelnes Lastobjekt O kann in einem Schritt A klassifiziert und in einem Schritt B lokalisiert werden. Bei einer Anhäufung mehrerer Lastobjekte O1, O2, O3 können die einzelnen Lastobjekte O1, O2, O3 zunächst in einem Schritt C detektiert und deren Abmaße, von denen in der Figur 2 nur die Höhen h1, h2, h3 angegeben sind, bestimmt werden. Aus den Höhen h1, h2, h3 der Lastobjekte O1, O2, O3 ergibt sich eine Gesamthöhe h der Last L (Schritt D). Entsprechend ergibt sich aus den anderen ermittelten Abmessungen (Breite, Tiefe) dann eine Gesamtabmessung (Breite, Tiefe) der Last L.

Die Abmessungen der Lastobjekte O, O1, O2, O3 können hierbei beispielsweise während des Beladens des Flurförderzeugs 2, 3, 4 detektiert werden.

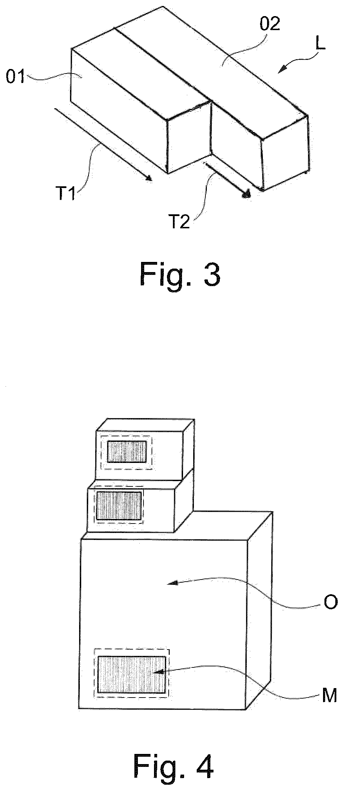

Wie in der Figur 3 gezeigt, können umstellte Lastobjekte O2 auch dadurch vermessen werden, dass zunächst das benachbarte Lastobjekt O1 detektiert wird und dessen Tiefe T1 bestimmt wird und anschließend der überstehende Teil des Lastobjekts O2 aufaddiert wird, wodurch sich die Tiefe T2 des Lastobjekts O2 ergibt. Dabei überprüft die Flugdrohne 5, ob die Lastobjekte O1, O2 am hinteren Ende plan enden.

Anhand der Abmaße der einzelnen Lastobjekte O1, O2 und der bekannten Maße der, in der Figur 2 bzw. 3 nicht dargestellten, Ladefläche des Flurförderzeugs 2, 3, 4 wird eine konkrete dreidimensionale Verteilung der Last L auf der mittels des Sensors S ebenfalls erkannten Ladefläche des Flurförderzeugs 2, 3, 4 bestimmt. Dadurch können freie Flächen zum Kommissionieren durch das Flurförderzeug 2, 3, 4 genutzt werden.

Die Figur 4 zeigt ein Prinzipbild zur Gewichts-Erkennung. Das Gewicht einzelner Lastobjekte O kann durch Marker M, beispielsweise QR-Codes, Barcodes, Aruco-Marker etc., an die Flugdrohne 5 übermittelt werden, indem der Sensor S der Flugdrohne 5 den entsprechenden Marker M erfasst und die Datenverabeitungseinheit D der Flugdrohne 5 durch Auswertung der Sensordaten des Sensors S den Marker M ausliest und diese Informationen dem Lastobjekt O zuweist.

Sofern durch zusätzliche Sensorik, beispielsweise durch Gewichtssensoren, das Gewicht dem Lastobjekt beim Beladen zugeordnet wird, kann weiterhin die Gewichtsverteilung der Last ermittelt werden.

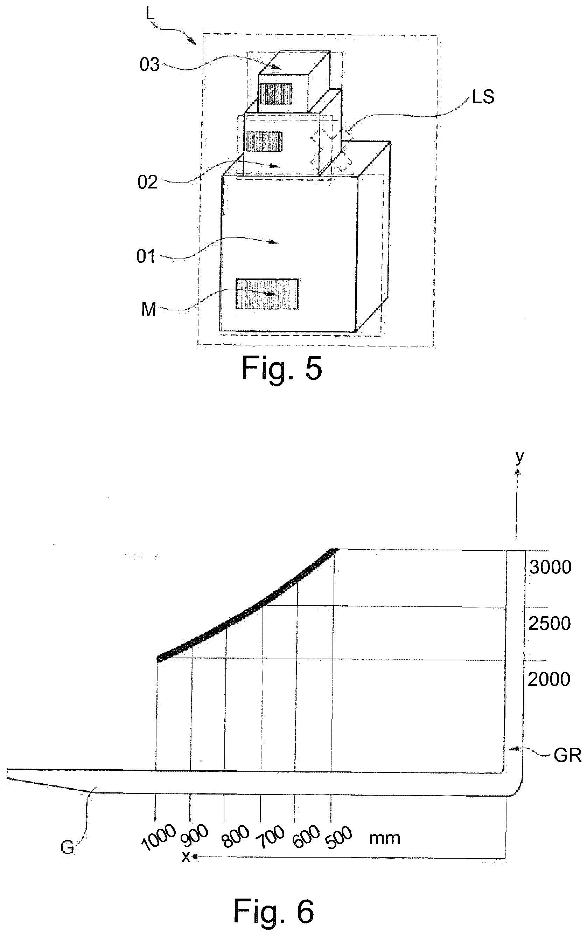

In der Figur 5 ist ein Prinzipbild zur Erkennung des Lastschwerpunkts LS der Last L dargestellt. Zunächst werden die Lastobjekte O1, O2, O3 vom Sensor S der Flugdrohne 5 erfasst und die Geometrie und der Lageort jedes einzelnen Lastobjekts O1, O2, O3 durch Auswertung der Sensorsignale des Sensors S in der Datenverarbeitungseinheit D der Flugdrohne 5 mittels künstlicher Intelligenz erkannt. Zusätzlich kann durch einen entsprechenden Marker M, beispielsweise QR-Code, Aruco Marker, Barcode etc., das Gewicht jedes Lastobjekts O1, O2, O3 der Flugdrohne 5 übermittelt werden. Durch die Gesamtheit der Informationen wird ein präziser Lastschwerpunkt LS der gesamten Last L ermittelt, insbesondere die vertikale Höhe des Lastschwerpunktes LS der Last L und der horizontale Lastschwerpunktabstand der Last L.

Insbesondere für das autonome Flurförderzeug 3 mit der Hubplattfo rm ist der Lastschwerpunkt, insbesondere die vertikale Höhe des Lastschwerpunktes LS, der Last L von Bedeutung, weil dadurch die Geschwindigkeit und die Performance des autonome Flurförderzeugs 3 kontinuierlich angepasst werden kann.

Die Figur 6 zeigt ein Tragfähigkeitsschaubild zur Darstellung des horizontalen Lastschwerpunktabstands. Auf der vertikalen Achse y sind die Lastgewichte aufgetragen, während auf der horizontalen Achse x der Lastschwerpunktabstand aufgetragen ist. Das Tragfähigkeitsschaubild gibt schematisch die Verhältnisse auf beispeilsweise einer Lastgabel G eines Flurförderzeugs 2, 3, 4 wieder. Dabei entspricht die x-Achse der Lastgabel G und die y-Achse dem Gabelrücken GR. Ist die Last L auf der Lastgabel G des Flurförderzeugs 2, 3, 4 angeordnet, so ist der Lastschwerpunktabstand der Abstand des Lastschwerpunkts LS vom Gabelrücken GR.

Insbesondere für ein autonomes Flurförderzeug ist bei einer Lastaufnahme der Lastschwerpunktabstand der Last L entscheidend für die Erlaubnis einer Lastaufnahme. Ohne diese Information ist eine Lastaufnahme durch ein autonomes Fahrzeug nicht möglich.

## Patentansprüche

1. Verfahren zur Lasterkennung bei einem Flurförderzeug (2, 3, 4), wobei die Last (L) mittels mindestens eines optischen Sensors (S) erfasst und durch Auswertung der Sensordaten des Sensors (S) mittels künstlicher Intelligenz in mindestens einer Datenverarbeitungseinheit (D) erkannt wird, **dadurch gekennzeichnet, dass** ein Lastschwerpunkt (LS) der Last (L) durch Auswertung der Sensordaten des Sensors (S) in der Datenverarbeitungseinheit (D) ermittelt wird.

2. Verfahren nach Anspruch 1, **dadurch gekennzeichnet, dass** als optischer Sensor (S) eine Kamera verwendet wird.

3. Verfahren nach Anspruche 1 oder 2, **dadurch gekennzeichnet, dass** der Sensor (S) von dem Flurförderzeug (2, 3, 4) mitgeführt wird.

4. Verfahren nach Anspruch 3, **dadurch gekennzeichnet, dass** als Sensor (S) ein an einer Hubeinrichtung (H) des Flurförderzeugs (2, 3, 4) angeordneter Sensor (S) verwendet wird.

5. Verfahren nach einem der Ansprüche 1 bis 4, **dadurch gekennzeichnet, dass** als Sensor (S) ein außerhalb des Flurförderzeugs (2, 3, 4) angeordneter Sensor (S) verwendet wird.

6. Verfahren nach Anspruch 5, **dadurch gekennzeichnet, dass** der Sensor (S) von einer Flugdrohne (5) mitgeführt wird.

7. Verfahren nach Anspruch 6, **dadurch gekennzeichnet, dass** die Datenverarbeitungseinheit (D) von der Flugdrohne (5) mitgeführt wird.

8. Verfahren nach einem der Ansprüche 1 bis 7, **dadurch gekennzeichnet, dass** die Datenverarbeitungseinheit (D) von dem Flurförderzeug (2, 3, 4) mitgeführt wird.

9. Verfahren nach einem der Ansprüche 1 bis 8, **dadurch gekennzeichnet, dass** die Datenverarbeitungseinheit (D) stationär betrieben wird.

10. Verfahren nach einem der Ansprüche 1 bis 9, **dadurch gekennzeichnet, dass** die Sensordaten des Sensors (S) über eine drahtlose Datenverbindung an die Datenverarbeitungseinheit (D) übermittelt werden.

11. Verfahren nach einem der Ansprüche 1 bis 10, **dadurch gekennzeichnet, dass** mindestens zwei Datenverarbeitungseinheiten (D) verwendet werden, die über eine drahtlose Datenverbindung Informationen austauschen.

12. Verfahren nach einem der Ansprüche 1 bis 11, **dadurch gekennzeichnet, dass** die Auswertung der Sensordaten des Sensors (S) in der Datenverarbeitungseinheit (D) mittels eines bildgebenden Verfahrens durchgeführt wird.

13. Verfahren nach einem der Ansprüche 1 bis 12, **dadurch gekennzeichnet, dass** das Flurförderzeug (2, 3, 4) und die dazugehörige Last (L) mittels des Sensors (S) erfasst werden und durch Auswertung der Sensordaten des Sensors (S) in der Datenverarbeitungseinheit (D) ein Abgleich von Lastdaten der erkannten Last (L) mit, in der Datenverarbeitungseinheit (D) für das Flurförderzeug (2, 3, 4) vorher gespeicherten, Lastdaten durchgeführt wird, wobei bei einer Abweichung der Lastdaten die Lastdaten für das Flurförderzeug (2, 3, 4) aktualisiert werden.

14. Verfahren nach einem der Ansprüche 7 bis 13, **dadurch gekennzeichnet, dass** die Lasten (L) mindestens zweier Flurförderzeuge (2, 3, 4) von dem von der Flugdrohne (5) mitgeführten Sensor (S) erfasst werden.

15. Verfahren nach einem der Ansprüche 7 bis 14, **dadurch gekennzeichnet, dass** die Last (L) des Flurförderzeugs (2, 3, 4) oder die Lasten (L) mindestens zweier Flurförderzeuge (2, 3, 4) von den von mindestens zwei Flugdrohnen (5) mitgeführten Sensoren (S) erfasst werden.

16. Verfahren nach einem der Ansprüche 1 bis 15, **dadurch gekennzeichnet, dass** einzelne Lastobjekte (O, O1, O2, O3) der Last (L) durch Auswertung der Sensordaten des Sensors (S) in der Datenverarbeitungseinheit (D) erkannt und deren Maße ermittelt werden und daraus eine Gesamtgröße der Last (L) kalkuliert wird.

17. Verfahren nach einem der Ansprüche 1 bis 16, **dadurch gekennzeichnet, dass** einzelne Lastobjekte (O, O1, O2, O3) der Last (L) durch Auswertung der Sensordaten des Sensors (S) in der Datenverarbeitungseinheit (D) erkannt werden und deren Anzahl ermittelt wird.

18. Verfahren nach einem der Ansprüche 1 bis 17, **dadurch gekennzeichnet, dass** Marker (M) von einzelnen Lastobjekten (O, O1, O2, O3) der Last (L) durch Auswertung der Sensordaten des Sensors (S) in der Datenverarbeitungseinheit (D) ausgelesen werden und ausgelesene Informationen, insbesondere Gewichtsinformationen, dem jeweiligen Lastobjekt (O, O1, O2, O3) zugeordnet werden.

19. Verfahren nach einem der Ansprüche 1 bis 18, **dadurch gekennzeichnet, dass** eine dreidimensionale Verteilung der Last (L) auf einer Ladefläche des Flurförderzeugs (2, 3, 4) durch Auswertung der Sensordaten des Sensors (S) in der Datenverarbeitungseinheit (D) ermittelt wird.

20. Verfahren nach einem der Ansprüche 1 bis 19, **dadurch gekennzeichnet, dass** in der Datenverarbeitungseinheit (D) ein Abgleich von Lastdaten der erkannten Last (L) mit Lastdaten der auftragsgemäß für das Flurförderzeug (2, 3, 4) vorgesehenen Last (L) durchgeführt wird, wobei bei einer Übereinstimmung der Lastdaten eine Freigabe für das Flurförderzeug (2, 3, 4) erteilt wird und bei einer Abweichung eine Fehlermeldung und/oder ein Rückgabeauftrag für das Flurförderzeug (2, 3, 4) erteilt wird.

21. System (1) zur Durchführung des Verfahrens nach einem der Ansprüche 1 bis 20 mit mindestens einem Flurförderzeug (2, 3, 4) und einer Last (L) für das Flurförderzeug (2, 3, 4), **dadurch gekennzeichnet, dass** mindestens eine mit künstlicher Intelligenz arbeitende, mit mindestens einem optischen Sensor (S), insbesondere einer Kamera, in Wirkverbindung stehende, Datenverarbeitungseinheit (D) vorgesehen ist, die dazu eingerichtet ist, die Last (L) durch Auswertung der Sensordaten des Sensors (S) zu erkennen.

22. System (1) nach Anspruch 21, **dadurch gekennzeichnet, dass** der Sensor (S) an dem Flurförderzeug (2, 3, 4), insbesondere an einer Hubeinrichtung (H) des Flurförderzeugs (2, 3, 4), angebracht ist.

23. System (1) nach Anspruch 21 oder 22, **dadurch gekennzeichnet, dass** der Sensor (S) an einer Flugdrohne (5) angebracht ist.

24. System (1) nach Anspruch 23, **dadurch gekennzeichnet, dass** die Datenverarbeitungseinheit (D) in der Flugdrohne (5) untergebracht ist.

25. System (1) nach Anspruch 24, **dadurch gekennzeichnet, dass** die Datenverarbeitungseinheit (D) mit einer Datensende- und Datenempfangseinrichtung (E) in Wirkverbindung steht, die dazu ausgebildet ist, Informationen mit mindestens einer weiteren Flugdrohne (5) und/oder dem Flurförderzeug (2, 3, 4) auszutauschen.

## Claims

1. Method for detecting a load in an industrial truck (2, 3, 4), wherein the load (L) is captured by means of at least one optical sensor (S) and is detected by evaluating the sensor data from the sensor (S) by means of artificial intelligence in at least one data processing unit (D), **characterized in that** a load centre of gravity (LS) of the load (L) is determined by evaluating the sensor data from the sensor (S) in the data processing unit (D).

2. Method according to Claim 1, **characterized in that** a camera is used as the optical sensor (S).

3. Method according to Claim 1 or 2, **characterized in that** the sensor (S) is carried by the industrial truck (2, 3, 4).

4. Method according to Claim 3, **characterized in that** a sensor (S) arranged on a lifting device (H) of the industrial truck (2, 3, 4) is used as the sensor (S).

5. Method according to one of Claims 1 to 4, **characterized in that** a sensor (S) arranged outside the industrial truck (2, 3, 4) is used as the sensor (S).

6. Method according to Claim 5, **characterized in that** the sensor (S) is carried by an aerial drone (5).

7. Method according to Claim 6, **characterized in that** the data processing unit (D) is carried by the aerial drone (5).

8. Method according to one of Claims 1 to 7, **characterized in that** the data processing unit (D) is carried by the industrial truck (2, 3, 4).

9. Method according to one of Claims 1 to 8, **characterized in that** the data processing unit (D) is operated in a stationary manner.

10. Method according to one of Claims 1 to 9, **characterized in that** the sensor data from the sensor (S) are transmitted to the data processing unit (D) via a wireless data connection.

11. Method according to one of Claims 1 to 10, **characterized in that** at least two data processing units (D) are used and exchange information via a wireless data connection.

12. Method according to one of Claims 1 to 11, **characterized in that** the sensor data from the sensor (S) are evaluated in the data processing unit (D) by means of an imaging method.

13. Method according to one of Claims 1 to 12, **characterized in that** the industrial truck (2, 3, 4) and the associated load (L) are captured by means of the sensor (S) and load data relating to the detected load (L) are compared with load data previously stored in the data processing unit (D) for the industrial truck (2, 3, 4) by evaluating the sensor data from the sensor (S) in the data processing unit (D), wherein the load data for the industrial truck (2, 3, 4) are updated in the event of a deviation of the load data.

14. Method according to one of Claims 7 to 13, **characterized in that** the loads (L) of at least two industrial trucks (2, 3, 4) are captured by the sensor (S) carried by the aerial drone (5).

15. Method according to one of claims 7 to 14, **characterized in that** the load (L) of the industrial truck (2, 3, 4) or the loads (L) of at least two industrial trucks (2, 3, 4) is/are captured by the sensors (S) carried by at least two aerial drones (5).

16. Method according to one of Claims 1 to 15, **characterized in that** individual load objects (O, O1, O2, O3) of the load (L) are detected by evaluating the sensor data from the sensor (S) in the data processing unit (D) and their dimensions are determined and a total size of the load (L) is calculated therefrom.

17. Method according to one of Claims 1 to 16, **characterized in that** individual load objects (O, O1, O2, O3) of the load (L) are detected by evaluating the sensor data from the sensor (S) in the data processing unit (D) and their number is determined.

18. Method according to one of Claims 1 to 17, **characterized in that** markers (M) of individual load objects (O, 01, O2, O3) of the load (L) are read out by evaluating the sensor data from the sensor (S) in the data processing unit (D) and read information, in particular weight information, is assigned to the respective load object (O, O1, O2, 03).

19. Method according to one of Claims 1 to 18, **characterized in that** a three-dimensional distribution of the load (L) on a loading surface of the industrial truck (2, 3, 4) is determined by evaluating the sensor data from the sensor (S) in the data processing unit (D).

20. Method according to one of Claims 1 to 19, **characterized in that** load data relating to the detected load (L) are compared with load data relating to the load (L) intended for the industrial truck (2, 3, 4) according to the order in the data processing unit (D), wherein a clearance for the industrial truck (2, 3, 4) is granted if the load data match and an error message and/or a return order for the industrial truck (2, 3, 4) is issued in the event of a deviation.

21. System (1) for carrying out the method according to one of Claims 1 to 20, having at least one industrial truck (2, 3, 4) and a load (L) for the industrial truck (2, 3, 4), **characterized in that** at least one data processing unit (D) working with artificial intelligence and operatively connected to at least one optical sensor (S), in particular a camera, is provided and is configured to detect the load (L) by evaluating the sensor data from the sensor (S).

22. System (1) according to Claim 21, **characterized in that** the sensor (S) is mounted on the industrial truck (2, 3, 4), in particular on a lifting device (H) of the industrial truck (2, 3, 4).

23. System (1) according to Claim 21 or 22, **characterized in that** the sensor (S) is mounted on an aerial drone (5).

24. System (1) according to Claim 23, **characterized in that** the data processing unit (D) is accommodated in the aerial drone (5).

25. System (1) according to Claim 24, **characterized in that** the data processing unit (D) is operatively connected to a data transmitting and data receiving device (E) which is designed to exchange information with at least one further aerial drone (5) and/or the industrial truck (2, 3, 4).

## Revendications

1. Procédé de détection de charge dans un chariot de manutention (2, 3, 4), la charge (L) étant détectée au moyen d'au moins un capteur optique (S) et identifiée par évaluation des données de capteur provenant du capteur (S) au moyen d'une intelligence artificielle dans au moins une unité de traitement de données (D), **caractérisé en ce qu'**un centre de gravité de charge (LS) de la charge (L) est déterminé par évaluation des données de capteur provenant du capteur (S) dans l'unité de traitement de données (D).

2. Procédé selon la revendication 1, **caractérisé en ce qu'**une caméra est utilisée comme capteur optique (S).

3. Procédé selon les revendications 1 ou 2, **caractérisé en ce que** le capteur (S) est transporté par le chariot de manutention (2, 3, 4).

4. Procédé selon la revendication 3, **caractérisé en ce qu'**un capteur (S) placé sur un dispositif de levage (H) du chariot de manutention (2, 3, 4) est utilisé comme capteur (S).

5. Procédé selon l'une quelconque des revendications 1 à 4, caractérisé qu'un capteur (S) placé à l'extérieur du chariot de manutention (2, 3, 4) est utilisé comme capteur (S).

6. Procédé selon la revendication 5, **caractérisé en ce que** le capteur (S) est transporté par un drone aérien (5).

7. Procédé selon la revendication 6, **caractérisé en ce que** l'unité de traitement de données (D) est transportée par le drone aérien (5).

8. Procédé selon l'une quelconque des revendications 1 à 7, **caractérisé en ce que** l'unité de traitement de données (D) est transportée par le chariot de manutention (2, 3, 4).

9. Procédé selon l'une quelconque des revendications 1 à 8, **caractérisé en ce que** l'unité de traitement de données (D) est exploitée de manière stationnaire.

10. Procédé selon l'une quelconque des revendications 1 à 9, **caractérisé en ce que** les données de capteur provenant du capteur (S) sont transmises à l'unité de traitement de données (D) par une liaison de données sans fil.

11. Procédé selon l'une quelconque des revendications 1 à 10, **caractérisé en ce qu'**au moins deux unités de traitement de données (D), qui échangent des informations par l'intermédiaire d'une liaison de données sans fil, sont utilisées.

12. Procédé selon l'une quelconque des revendications 1 à 11, **caractérisé en ce que** l'évaluation des données de capteur provenant du capteur (S) dans l'unité de traitement de données (D) est effectuée au moyen d'un procédé d'imagerie.

13. Procédé selon l'une quelconque des revendications 1 à 12, **caractérisé en ce que** le chariot de manutention (2, 3, 4) et la charge (L) correspondante sont détectés au moyen du capteur (S) et **en ce que**, par évaluation des données de capteur provenant du capteur (S) dans l'unité de traitement de données, une comparaison de données de charge de la charge détectée (L) avec des données de charge préalablement mémorisées pour le chariot de manutention (2, 3, 4) est effectuée dans l'unité de traitement de données (D), les données de charge étant mises à jour pour le chariot de manutention (2, 3, 4) en cas d'écart entre les données de charge.

14. Procédé selon l'une quelconque des revendications 7 à 13, **caractérisé en ce que** les charges (L) d'au moins deux chariots de manutention (2, 3, 4) sont détectées par le capteur (S) transporté par le drone aérien (5).

15. Procédé selon l'une quelconque des revendications 7 à 14, **caractérisé en ce que** la charge (L) du chariot de manutention (2, 3, 4) ou les charges (L) d'au moins deux chariots de manutention (2, 3, 4) sont détectées par les capteurs (S) transportés par au moins deux drones aériens (5).

16. Procédé selon l'une quelconque des revendications 1 à 15, **caractérisé en ce que** des objets de charge individuels (O, O1, O2, O3) de la charge (L) sont identifiés, **en ce que** leurs masses sont déterminées et **en ce qu'**une valeur totale de la charge (L) est calculée à partir de celles-ci.

17. Procédé selon l'une quelconque des revendications 1 à 16, **caractérisé en ce que** des objets de charge individuels (O, O1, O2, O3) de la charge (L) sont identifiés par évaluation des données de capteur provenant du capteur (S) dans l'unité de traitement de données (D) et **en ce que** leur nombre est déterminé.

18. Procédé selon l'une quelconque des revendications 1 à 17, **caractérisé en ce que** des marqueurs (M) de différents objets de charge (O, O1, O2, O3) de la charge (L) sont lus par évaluation des données de capteur provenant du capteur (S) dans l'unité de traitement de données (D) et **en ce que** les informations lues, en particulier des informations de poids, sont associées à l'objet de charge (O, O1, O2, O3) respectif.

19. Procédé selon l'une quelconque des revendications 1 à 18, **caractérisé en ce qu'**une répartition tridimensionnelle de la charge (L) sur une surface de chargement du chariot de manutention (2, 3, 4) est déterminée par évaluation des données de capteur provenant du capteur (S) dans l'unité de traitement de données (D).

20. Procédé selon l'une quelconque des revendications 1 à 19, **caractérisé en ce que**, dans l'unité de traitement de données (D), une comparaison des données de charge de la charge (L) identifiée est effectuée avec les données de charge de la charge prévue conformément à la commande destinée au chariot de manutention (L) (2, 3, 4), une autorisation destinée au chariot de manutention (2, 3, 4) étant délivrée en cas de concordance entre les données de charge, et un message d'erreur et/ou un ordre de retour destiné au chariot de manutention (2, 3, 4) étant délivré en cas d'écart.

21. Système (1) pour mettre en œuvre le procédé selon l'une quelconque des revendications 1 à 20, comprenant au moins un chariot de manutention (2, 3, 4) et une charge (L) destinée au chariot de manutention (2, 3, 4), **caractérisé en ce qu'**il est prévu au moins une unité de traitement de données (D) qui fonctionne avec une intelligence artificielle, qui est en liaison active avec au moins un capteur optique (S), en particulier une caméra, et qui est conçue pour identifier la charge (L) par évaluation des données de capteur provenant du capteur (S).

22. Système (1) selon la revendication 21, **caractérisé en ce que** le capteur (S) est monté sur le chariot de manutention (2, 3, 4), en particulier sur un dispositif de levage (H) du chariot de manutention (2, 3, 4).

23. Système (1) selon la revendication 21 ou 22, **caractérisé en ce que** le capteur (S) est monté sur un drone aérien (5).

24. Système (1) selon la revendication 23, **caractérisé en ce que** l'unité de traitement de données (D) est logée dans le drone aérien (5).

25. Système (1) selon la revendication 24, **caractérisé en ce que** l'unité de traitement de données (D) est en liaison active avec un dispositif de transmission de données et de réception de données (E), qui est conçu pour échanger des informations avec au moins un autre drone aérien (5) et/ou avec le chariot de manutention (2, 3, 4).
